# EUROPEAN PATENT SPECIFICATION

(11) **EP 1 759 936 B1**
(45) Date of publication and mention of the grant of the patent: **25.03.2009**
(21) Application number: 06017171.7
(22) Date of filing: 17.08.2006
(51) Int. Cl.: B60R 21/231

(54) **Driver's leg protection apparatus**
Beinschutzvorrichtung für den Fahrer
Dispositif de protection des jambes pour le conducteur

(30) Priority: 30.08.2005 JP 2005249659
(43) Date of publication of application: 07.03.2007
(73) Proprietor: TAKATA CORPORATION, Minato-ku, Tokyo 106-8510 (JP)
(72) Inventor: Kashiwagi, Daisuke, Minato-ku Tokyo 106-8510 (JP)
(74) Representative: Banzer, Hans-Jörg

(56) References cited:
- EP-A- 1 555 168
- JP-A- 10 166 977
- JP-A- 11 091 488
- JP-A- 2004 210 093
- JP-A- 2005 193 819
- US-A- 5 797 621
- US-A1- 2004 207 183
- US-A1- 2004 262 896

## Description

### [Technical Field]

The present invention relates to a driver leg restraint apparatus for restraining driver's legs in a car crash, and particularly to a leg restraint apparatus of a driver in a driver's seat.

### [Background Art]

A knee air bag apparatus for restraining the driver's legs in a car crash is provided in a lower side of a steering column in a car. In the car crash, a gas generator performs the gas discharge, the discharged gas is supplied to the air bag, and the air bag is inflated and deployed between an interior panel and the driver's legs, whereby both driver legs are restricted.

In Japanese Unexamined Application Publication No. 2004-284416, there is disclosed that the protection cloth (referred to as reinforcing cloth 53 in the same publication) is provided on an external surface of the air bag in order to prevent that the air bag is damaged when a key is inserted into a key cylinder of the steering column cover or a key holder thereof and such is directly contacted with this air bag, in the inflation of the air bag.

In JP 2004210093A, an air bag device for knee protection is disclosed. The air bag device is capable of preventing the occurrence of gas leakage when a deploying and inflating air bag interferes with an accessory connected with a key. For this purpose, an air bag or the air bag device is provided with a cover and a general section. The inflow amount of gas into the cover is suppressed so as to reduce kinetic energy during inflation.

In JP 11091488A, a side protection air bag is disclosed. The side protection air bag comprises an external reinforcing cloth installed in a loosened condition on the window side of the air bag. By means of the external reinforcing cloth, a damaged window can be prevented from striking on the base material of the air bag.

### [Problems to be Solved by the Invention]

The object of the present invention is to improve the protection characteristic of an air bag by means of a protection cloth in a driver leg restraint apparatus having the protection cloth for protecting the air bag inflated and deployed in a lower side of a steering column (steering column cover) from a key holder and such.

### [Means for Solving the Problems]

This object is achieved by a driver leg restraint apparatus according to Claim 1. The dependent claims define preferred and advantageous embodiments of the invention.

A driver leg restraint apparatus of the present invention disposed on a lower side of a steering column includes an air bag upwardly inflatable in a vicinity of the lower surface of a steering column cover, and a strip shaped protection cloth that covers a part opposite to a car key device when the air bag is inflated, wherein when the air bag is inflated, the strip shaped protection cloth is positioned on an upper side of a top part of the air bag, and a space exists between the protection cloth and the top part of the air bag.

In a driver leg restraint apparatus of the present invention, if an air bag is upwardly inflated in a vicinity of a lower surface of a steering column cover, a protection cloth disposed at an upper side of a top part of this air bag is opposed to a key device. In case that a key holder and such dangles from the key device, the key holder and such is contacted with this protection cloth, first of all. Since a space exists between this protection cloth and a top part of the air bag, if the key holder is contacted with this protection cloth, the protection cloth is drawn into this space, thereby absorbing the impact from the key holder and such. As a result, the impact applied to the air bag from the key holder and such is alleviated or settled.

The side of the protection cloth is coupled to a surface of an instrument panel side of the air bag and the other side thereof is coupled to a surface of a driver side of the air bag, whereby the posture of this protection cloth is stabilized.

### [Brief Description of the Drawings]

Fig. 1(a) is a front view of an air bag of a driver leg restraint apparatus according to an embodiment of the present invention and Fig. (b) is a cross-sectional view taken along line B-B shown in Fig. (a).
Fig. 2 is an exploded view of the air bag and protection cloth shown in Fig. 1.
Fig. 3 is a side view of a front side of a car driver's seat when the air bag shown in Fig. 1 is inflated.

### [Detailed Description of Embodiments of the Invention]

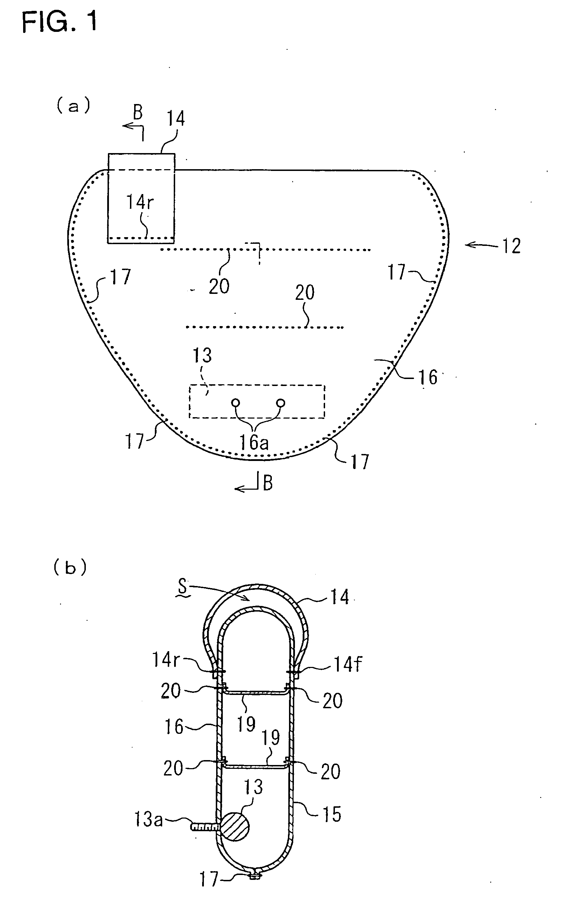

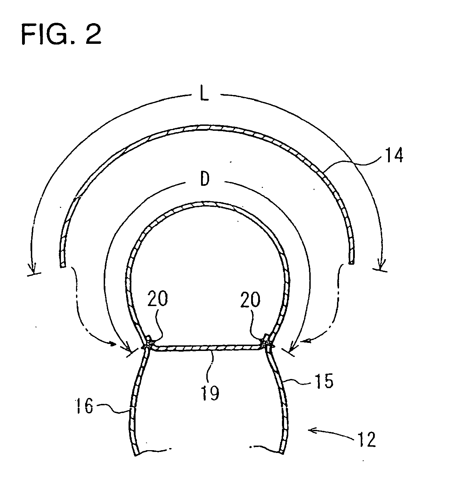

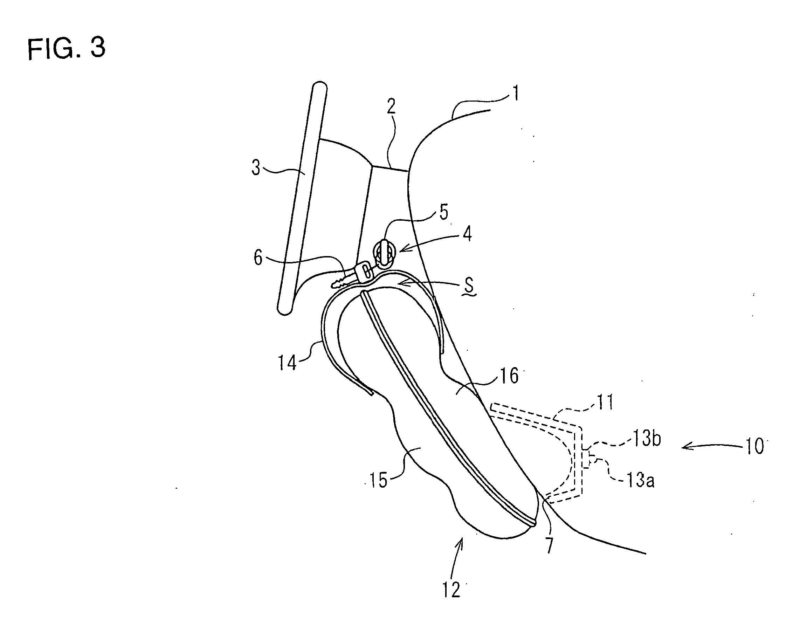

Hereinafter, the embodiments of the present invention will be described with reference to the drawings. Fig. 1(a) is a front view of an air bag of a driver leg restraint apparatus in accordance with the embodiments of the present invention, Fig. 1(b) is a cross-sectional view taken along line B-B shown in Fig. 1(a), Fig. 2 is an exploded view of the air bag and protection cloth, and Fig. 3 is a side view of a front side of a driver's seat in a car when this air bag is inflated. Moreover, left and right directions represent a width direction of a car body in the description below.

As shown in Fig. 3, a steering column (not shown) protrudes from the instrument panel 1 on the front of the drive's seat in the car and the steering column is surrounded by the steering column cover 2. A steering wheel 3 is fixed to a steering shaft (not shown) protruding from the steering column.

In this embodiment, a key device (key cylinder) 4 is provided on a right surface of the steering cover 2 (a right surface viewed from a driver of the driver's seat). The key holder 6 is mounted in dangled shape on a key 5 that is inserted into the key device 4. (The key 5 is shown as a separate key in Fig.3. Hereinafter, this key holder may be referred to as an attachment key.). This attachment key 6 dangles down to a side lower than a lower surface of the steering column cover 2 under a normal state (in a state of not being contacted with a protection cloth 14 described below).

A driver leg restraint apparatus 10 is provided on a lower side of this steering column cover 2.

This driver leg restraint apparatus 10 has a vessel-shaped case 11 having an aperture 7 on a front surface (a surface of the driver side), a cover for covering the aperture (not shown), an air bag 12 connected into the case 11 and a gas generator 13 for inflating the air bag 12.

The case 11 is disposed within an aperture (not shown) for evacuating the air bag provided in a region lower than the steering column cover 2 at the instrument panel 1. Generally, the air bag 12 is folded and housed within the case 11 and a lid (not shown) is mounted on a front aperture of the case 11 to cover the folding body of this air bag 12. When the air bag 12 is inflated, the lid is opened by a pressure of the air bag 12, whereby the aperture for evacuating the air bag is opened.

The air bag 12 is inflated by a gas from the gas generator 13, swells up toward the front side of the instrument panel 1 through the aperture for evacuating the air bag and deploys along the lower surface of the steering column cover 2 from a region on a side lower than the steering column cover 2 of the instrument panel 1, thereby being extended to a top from a bottom, as shown in Fig. 3.

In this embodiment, as shown in Fig. 1(a), the air bag 12 gets wider in left and right width (width in width direction of car body) from a lower part to an upper part and the left and right width of this air bag 12 is larger than that of the steering column cover 2.

When this air bag is inflated along a vicinity of the lower surface of the steering column cover 2, the center part of the left and right directions on the top part of the air bag 12 is opposed to the lower surface of the steering column cover 2, the left portion and right portion thereof get laterally wider than the left portion and right portion of the steering column cover 2. That is, in this embodiment, if the air bag 12 is inflated, the right surface thereof is opposed to the said key device 4 from a lower side.

Further, these left and right sides are in accordance with the left and right sides when the air bag 12 is viewed from the driver side, and these left and right sides are reversed when the air bag 12 is viewed from the side opposite to the driver side in Fig. 1(a). Hereinafter, the left and right direction corresponds to the left and right direction viewed from the driver side.

The air bag 12 has a front surface 15 on the driver side and a rear surface 16 on the instrument panel 1. In this embodiment, one sheet of panel is folded in two, of which one side thereof constitutes the front surface 15 and the other side thereof constitutes the rear surface 16, and the periphery portions of the overlapped front surface 15 and rear surface 16 are stitched to each other, whereby the air bag 12 is manufactured. Reference numeral 17 represents a seam of this stitching.

The protection cloth 14 is mounted on this air bag 12 so as to cover the right portion of the top part thereof when the air bag 12 is inflated.

The protection cloth 14 is constructed by a strip-shaped panel as a separate panel from the panel constituting an outer shell (front surface 15 and rear surface 16) of this air bag 12. The upper side of the air bag 12 is enclosed from the instrument panel side to the driver side by this protection cloth 14, in the lengthwise direction one side thereof is stitched and attached to the top part of the rear surface 16 and the other side is stitched and attached to the top part of the front surface 15. Reference numeral 14f represents a seam of stitching of this protection 14 and front surface 15, reference numeral 14r represents a seam of suture of this protection cloth 14 and rear surface 16.

As shown in Fig. 2, the lengthwise length L of this strip-shaped protection cloth 14 is larger than the distance D extended to a coupling portion (seam portion 14f) of the protection cloth 14 and front surface 15 passing through the upper part of the air bag 12 from a coupling portion (seam portion 14r) of this protection cloth 14 and rear surface 16 along the external surface of the inflated air bag 12. As a result, though the air bag is fully inflated, the protection cloth 14 remains loose so that a space S occurs between the protection cloth 14 and the top part of the air bag 12.

Further, in the present invention, it is preferable that the length L of this strip-shaped protection cloth 14 is 200 to 500 mm, and particularly, 280 to 380 mm, and in addition, the length L thereof is larger than the distance D described above by 5 to 100 mm, particularly, approximately 10 to 60 mm.

In addition, it is preferable that the coupling portion (seam portion 14r) of the protection cloth 14 and rear surface 16 is positioned in the lower side apart from the upper surface of the rear surface 16 by 50 to 200 mm, particularly, 120 to 170 mm when the air bag 12 is flattened. Further, it is preferable that the coupling portion (seam portion 14f) of the protection cloth 14 and front surface 15 is positioned in the lower side apart from the upper part of the front surface 15 by 50 to 200 mm, particularly, 120 to 170 mm when the air bag is flattened.

It is preferable that the left-right-direction width of this protection cloth 14 is 10 to 250 mm, particularly, 100 to 150 mm.

A special limitation is not imposed to the materials of this protection cloth 14, but it is suitable that the constituent materials thereof are the same as the constituent materials of the air bag 12.

In this embodiment, as shown in Fig. 1(b), a tether 19 for restricting the inflation thickness of the air bag 12 is provided by connecting the front surface 15 and rear surface 16 to the inside of the air bag 12. Reference numeral 20 represents a seam that stitches both portions of thickness direction of the air bag of the tether 19 to the front surface 15 and rear surface 16, respectively. In this embodiment, the tether 19 extends continuously in left and right directions, and is provided in the upper-bottom multiple steps (double steps in this embodiment). Both portions of left and right directions are apart from left and right sides of the air bag 12 and a ventilation space is formed therebetween.

A gas generator 13 is disposed within this air bag 12. A stud bolt 13a protrudes from this gas generator 13 or a holder (not shown) holding the same. When these stud bolts 13a are inserted into an inserting hole 16a formed adjacent to the lower part of the rear surface 16 and an inserting hole (not shown) formed on the rear surface of the case 11, respectively, this stud bolt 13a is fastened with a nut 13b, whereby the gas generator 13 and the lower part of the rear surface 16 generator 13 is fixed to the case 11.

Then, the air bag 12 is folded and housed within the case 11, on which a lid is mounted, whereby the driver leg restraint apparatus 10 is constructed.

In case that a car having the driver leg restraint apparatus 10 constructed as shown above crashes, the gas generator 13 performs the gas discharge, whereby the air bag 12 starts inflating. First, this air bag 12 pushes and opens the lid, and begins to inflate toward the front surface of the instrument panel 1 through the aperture 7 for the air bag evacuation 7, and then, deploys upwardly along the front surface of the instrument panel 1.

As shown in Fig. 3, in this driver leg restraint apparatus 10, if the air bag 12 is inflated up to a vicinity of the lower surface of the steering column cover 2, the protection cloth 14 is opposed to the key device 4 from the lower side. As shown in Fig. 3, since the space S exists between this protection cloth 14 and the outer surface of the upper end part of the air bag 12, the protection cloth 14 is drawn into this space S, thereby absorbing the impact applied to the air bag 12 from the attachment key 6 when an attachment key 6 comes into contact with the protection cloth 14. Consequently, the impact applied to the air bag 12 from the attachment key 6 is alleviated or settled.

The above-referenced embodiment shows an example of the present invention, which is not confined only to the construction shown.

In the above-referenced embodiment, both sides of the protection cloth are coupled directly to the front surface and rear surface of the air bag by the stitching, respectively, but the connection may be carried out through a connecting member (for example, a dangling string).

The construction of the steering peripheral member and the air bag may be left and right reversed to the above-referenced embodiment.

## Claims

1. A driver leg restraint apparatus disposed on a lower side of a steering column of a vehicle, comprising:
an air bag (12) upwardly inflatable in a vicinity of a lower surface of a steering column cover (2);
**characterized by** a protection cloth (14) that is constructed by a strip shaped panel separate from a panel constituting an outer shell of the air bag (12) and that covers a part opposite to a car key device (4) when the air bag is inflated,
wherein when the air bag (12) is inflated, the protection cloth (14) is positioned on an upper side of a top part of the air bag (12), and a space (S) exists between the protection cloth (14) and the top part of the air bag (12), and wherein one side of the protection cloth (14) is coupled to a surface (16) of an instrument panel side of the air bag (12) and the other side thereof is coupled to a surface (15) of a driver side of the air bag (12).

2. The driver leg restraint apparatus according to Claim 1,
wherein the protection cloth (14) is coupled to the surface (16) of the instrument panel side and to the surface (15) of the driver side by means of stitching.

3. The driver leg restraint apparatus according to Claim 1 or 2,
wherein a length (L) of the protection cloth (14) between a coupling portion to the surface (16) of the instrument panel side and a coupling portion to the surface (15) of the driver side is larger than a distance (D) between the coupling portions passing through the top part of the air bag (12).

4. The driver leg restraint apparatus according to Claim 3,
wherein the length (L) of the protection cloth (14) is from 200 to 500 mm, preferably from 280 to 380 mm.

5. The driver leg restraint apparatus according to Claim 3 or 4,
wherein the length (L) of the protection cloth (14) is larger than the distance (D) between the coupling portions by 5 to 100 mm, preferably by 10 to 60 mm.

## Patentansprüche

1. Beinrückhaltevorrichtung für einen Fahrer, welche an einer Unterseite einer Lenksäule eines Fahrzeugs angeordnet ist, umfassend:
einen Airbag (12), welcher in einer Nähe einer unteren Fläche einer Lenksäulenabdeckung (2) nach oben aufblasbar ist;
**gekennzeichnet durch** ein Schutzgewebe (14), welches aus einer streifenförmigen Stoffbahn getrennt von einer Stoffbahn, die eine Außenhülle des Airbags (12) bildet, aufgebaut ist und
welches einen Teil gegenüber einer Autoschlüsselvorrichtung (4) bedeckt, wenn der Airbag aufgeblasen wird,
wobei, wenn der Airbag (12) aufgeblasen wird, das Schutzgewebe (14) auf einer oberen Seite eines oberen Teils des Airbags (12) angeordnet ist und ein Zwischenraum (S) zwischen dem Schutzgewebe (14) und dem oberen Teil des Airbags (12) vorhanden ist,
und wobei eine Seite des Schutzgewebes (14) mit einer Fläche (16) einer Armaturenbrettseite des Airbags (12) gekoppelt ist und die andere Seite davon mit einer Fläche (15) einer Fahrerseite des Airbags (12) gekoppelt ist.

2. Beinrückhaltevorrichtung für einen Fahrer nach Anspruch 1, wobei das Schutzgewebe (14) mit der Fläche (16) der Armaturenbrettseite und mit der Fläche (15) der Fahrerseite mittels Nähen gekoppelt ist.

3. Beinrückhaltevorrichtung für einen Fahrer nach Anspruch 1 oder 2,
wobei eine Länge (L) des Schutzgewebes (14) zwischen einem Koppelabschnitt mit der Fläche (16) der Armaturenbrettseite und einem Koppelabschnitt mit der Fläche (15) der Fahrerseite größer als ein Abstand (D) zwischen den Koppelabschnitten, welche durch den oberen Teil des Airbags (12) verlaufen, ist.

4. Beinrückhaltevorrichtung für einen Fahrer nach Anspruch 3, wobei die Länge (L) des Schutzgewebes (14) in einem Bereich von 200-500 mm, vorzugsweise von 280-380 mm, liegt.

5. Beinrückhaltevorrichtung für einen Fahrer nach Anspruch 3 oder 4,
wobei die Länge (L) des Schutzgewebes (14) um 5-100 mm, vorzugsweise um 10-60 mm, größer als der Abstand (D) zwischen den Koppelabschnitten ist.

## Revendications

1. Dispositif de retenue de jambe de conducteur disposé sur un côté inférieure d'une colonne de direction d'un véhicule, comprenant :
un coussin d'air (12) gonflable vers le haut à proximité d'une surface inférieure d'un dispositif d'habillage de colonne de direction (2) ;
**caractérisé par** une toile de protection (14) qui est constitué d'un panneau en forme de bande séparé d'un panneau constituant une enveloppe externe du coussin gonflable (12) et qui couvre une partie opposée à un dispositif de clé de voiture (4) quand le coussin gonflable est gonflé,
dans lequel lorsque le coussin gonflable (12) est gonflé, la toile de protection (14) est positionnée sur un côté de dessus d'une partie supérieure du coussin de protection (12), et un espace (S) existe entre la toile de protection (14) et la partie supérieure du coussin gonflable (12),
et dans lequel un côté de la toile de protection (14) est couplé à une surface (16) d'un côté de tableau de bord du coussin gonflable (12) et l'autre côté de celle-ci est couplé à une surface (15) d'un côté de conducteur du coussin gonflable (12).

2. Dispositif de retenue de jambe selon la revendication 1, dans lequel la toile de protection (14) est couplée à la surface (16) du côté de tableau de bord et à la surface (15) du côté de conducteur au moyen de coutures.

3. Dispositif de retenue de jambe de conducteur selon la revendication 1 ou 2, dans lequel une longueur (L) de la toile de protection (14) entre une partie de couplage à la surface (16) du côté de tableau de bord et une partie de couplage à la surface (15) du côté de conducteur est plus grande qu'une distance (D) entre les parties de couplage passant à travers la partie supérieure du coussin gonflable.

4. Dispositif de retenue de jambe de conducteur selon la revendication 3, dans lequel la longueur (L) de la toile de protection (14) est de 200 à 500 mm, de préférence de 280 à 380 mm.

5. Dispositif de retenue de jambe de conducteur selon la revendication 3 ou 4, dans lequel la longueur (L) de la toile de protection (14) est plus grande de 5 à 100 mm, de préférence de 10 à 60 mm, que la distance (D) entre les parties de couplage.
